# EUROPEAN PATENT APPLICATION

(11) **EP 4 546 438 A1**
(43) Date of publication of application: **30.04.2025**
(21) Application number: 23827465.8
(22) Date of filing: 19.06.2023
(51) Int. Cl.: H01M 4/04, F26B 3/04, F26B 3/28, F26B 13/08, F26B 21/00

(54) **HYBRID DRYING SYSTEM FOR MANUFACTURING SECONDARY BATTERY ELECTRODE**

(30) Priority: 23.06.2022 KR 20220077126; 12.04.2023 KR 20230048382; 01.06.2023 KR 20230071086
(71) Applicant: SFA Engineering Corp., Hwaseong-si, Gyeonggi-do 18472 (KR)
(72) Inventor: JOO, Kang Wo, Cheonan-si Chungcheongnam-do 31079 (KR); CHAE, Ho Chol, Hwaseong-si Gyeonggi-do 18442 (KR); HAN, Kyung Roc, Hwaseong-si Gyeonggi-do 18443 (KR); LEE, Jong Chan, Hwaseong-si Gyeonggi-do 18429 (KR); LIM, Yong Hwan, Hwaseong-si Gyeonggi-do 18429 (KR); YOON, Hyung Seok, Seongnam-si Gyeonggi-do 13525 (KR); CHOI, Kyo Won, Asan-si Chungcheongnam-do 31417 (KR)
(74) Representative: Patentanwälte Hemmer Lindfeld Frese Partnerschaft mbB
(86) International application number: PCT/KR2023/008445
(87) International publication number: WO 2023/249349

(57) **Abstract**

Provided is an orthogonal-axis power transmission device. The orthogonal-axis power transmission device according to an embodiment of the present inventive concept includes: a main structure assembly forming an exterior structure and having a space portion formed therein, the space portion being sealed; an input shaft assembly connected to one side of the main structure assembly, and to which rotational power of a motor is input; an output shaft assembly connected to the other side of the main structure assembly intersecting the input shaft assembly, and from which the rotational power of the motor is output; and a link assembly for changing a power transmission direction arranged to operate in the space portion of the main structure assembly to prevent propagation of noise or vibration, connected to the input shaft assembly and the output shaft assembly within the main structure assembly by a link method, and changing the power transmission direction from the input shaft assembly to the output shaft assembly.

## Description

### TECHNICAL FIELD

The present inventive concept relates to a hybrid drying system for manufacturing a secondary battery electrode, and more particularly, to a hybrid drying system for manufacturing a secondary battery electrode, which may effectively suppress binder migration that may occur when wet slurry is dried at high speed, and may prevent deterioration of adhesion between metal foil and a dried electrode according thereto even after wet slurry drying.

### BACKGROUND ART

Secondary batteries have many advantages, such as high energy density, high operating voltage, and excellent preservation and life properties, and thus have been widely used not only in various portable electronic devices, such as personal computers, camcorders, mobile phones, portable CD players, PDAs, etc., but also in electric vehicles.

Examples of secondary batteries include nickel-cadmium batteries, nickel-hydrogen batteries, and lithium batteries. Lithium secondary batteries can be manufactured to have higher energy density and longer lifespan than other types of secondary batteries, and thus are used in many fields.

A lithium secondary battery has a case filled with an electrolyte and an electrode assembly accommodated in the case. The electrode assembly is a stack of an anode, a separator, and a cathode, and has a jelly-roll-shaped winding structure or a stack structure.

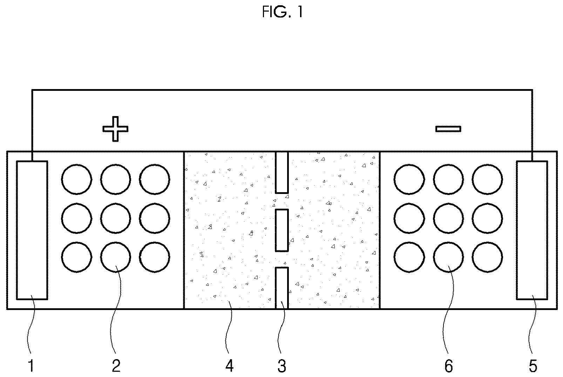

Looking at the principle of the lithium secondary battery with reference to FIG. 1, lithium ions contained in anode active material 2 of the anode with an anode substrate 1 pass through a separator 3 by an electrolyte 4 composed of an organic solvent, move to the cathode with a cathode substrate 5, and are then inserted into cathode active material 6 having a layered structure, which is referred to as charging. Discharge refers to generation of electricity by utilizing a flow of electrons occurring when the lithium ions inserted into the cathode active material 6 move back to the anode through the separator 3. In other words, it is a principle that generates an electric current by the movement of lithium ions through electrochemical oxidation-reduction reaction.

In order to improve the performance of secondary batteries, it is necessary to improve the efficiency of electrochemical reactions, and to this end, a lot of research has been conducted, such as electrode material changes, electrode surface coating, cleaning, and thick film technology.

Meanwhile, the secondary battery electrode process is a process of applying electrode slurry to a current collector made of a metal component, drying the electrode slurry at a high temperature, and then pressing the electrode slurry.

In this state, a coating process of applying the electrode slurry to an electrode current collector and a process of removing a solvent component of the applied electrode slurry to attach the electrode slurry on the electrode current collector are performed while electrode current collector foil is continuously transferred in a roll to roll manner. Hereinafter, the current collector is referred to as metal foil (Meta Foil).

The electrode slurry is a slurry shaped mixture of the electrode active material and a binder. In order to increase a bonding strength between electrode current collector fabric and an electrode material, a small amount of a component such as styrene butadiene rubber (SBR), that is, a binder, is added to an active material. When a large amount of binder is added, electrical measurement deteriorates. Thus, the binder is added in a small amount within a range where delamination that may occur when a bonding strength between the dried electrode slurry and the electrode current collector is weak does not occur.

While binder components in the electrode slurry are continuously transferred in a roll to roll manner, binder migration occurs depending on drying process conditions, which deteriorates the bonding strength between the metal foil that is a current collector and the electrode with dried slurry.

The so-called binder migration, which is the main cause of a reduced adhesion problem occurring during the drying process, has been known to increase further when wet slurry is dried at high speed. Therefore, as it is the main reason why high-speed drying units cannot be used in the coating drying process of a secondary battery electrode process, a need for the development of technology to resolve this issue arises.

### DESCRIPTION OF EMBODIMENTS

### TECHNICAL PROBLEM

It is an objective of the present inventive concept to provide a hybrid drying system for manufacturing a secondary battery electrode, which may effectively suppress binder migration that may occur when wet slurry is dried at high speed, and may prevent deterioration of adhesion between metal foil (Meta Foil) and a dried electrode according thereto even after wet slurry drying.

### ADVANTAGEOUS EFFECTS OF DISCLOSURE

According to the present inventive concept, the binder migration that may occur when wet slurry is dried at high speed may be effectively suppress, and the deterioration of adhesion between metal foil (Meta Foil) and a dried electrode according thereto even after wet slurry drying may be prevented.

### BRIEF DESCRIPTION OF DRAWINGS

FIG. 1 is a schematic structural diagram of a general secondary battery.
FIG. 2 is a configuration view of a hybrid drying system for manufacturing a secondary battery electrode, according to a first embodiment of the present inventive concept.
FIG. 3 is an enlarged view of main parts of FIG. 2.
FIG. 4 is a process diagram of FIG. 2.
FIG. 5 is an enlarged view of a unit external mounting portion area, as an enlarged view of a main portion of FIG. 3.
FIG. 6 is a process diagram showing that a high-speed drying unit is applied to FIG. 5.
FIG. 7 is a control block diagram of the hybrid drying system for manufacturing a secondary battery electrode in FIG. 2.
FIGS. 8 and 9 illustrate different application examples of the high-speed drying unit.
FIG. 10 is an enlarged view of a unit external mounting portion area in a hybrid drying system for manufacturing a secondary battery electrode, according to a second embodiment of the present inventive concept.
FIG. 11 is a process diagram showing that the high-speed drying unit is applied to FIG. 10.
FIG. 12 is a control block diagram of the hybrid drying system for manufacturing a secondary battery electrode in FIG. 10.
FIGS. 13 and 14 are enlarged views of a unit external mounting portion area in a hybrid drying system for manufacturing a secondary battery electrode, according to a third embodiment of the present inventive concept, which illustrate the operation of a partition wall.
FIGS. 15 to 21 illustrate modified examples of a hot air drying furnace chamber.
FIG. 22 is a view for describing an opening shield portion provided in a hybrid drying system for manufacturing a secondary battery electrode, according to a fourth embodiment of the present inventive concept.
FIG. 23 is a view for describing a cooling fluid flow portion provided in a hybrid drying system for manufacturing a secondary battery electrode, according to a fifth embodiment of the present inventive concept.
FIG. 24 is a view showing a flow of the cooling fluid in FIG. 23. BEST MODE

According to an aspect of the present inventive concept, there is provided a hybrid drying system for manufacturing a secondary battery electrode, the hybrid drying system including a hot air drying furnace chamber forming a place for hot air drying of wet slurry applied to metal foil (Meta Foil) forming the secondary battery electrode and having a high-speed drying section formed in one side thereof, and a hot air flow prevention portion provided in the high-speed drying section, and preventing hot air in the hot air drying furnace chamber from flowing into the high-speed drying section, to suppress migration of a binder included in the wet slurry during the high-speed drying of the wet slurry.

The hybrid drying system may further include a unit mounting operation portion that is provided in the hot air drying furnace chamber, in which a predetermined high-speed drying unit performing high-speed drying for the metal foil in the hot air drying furnace chamber is mounted and operates, wherein the high-speed drying section is arranged in an area of the unit mounting operation portion.

The unit mounting operation portion may include a unit mounting portion that is provided in the hot air drying furnace chamber and forms a place in which the high-speed drying unit is mounted.

The unit mounting portion may include a unit external mounting portion that allows the high-speed drying unit to be mounted outside the hot air drying furnace chamber.

The hot air flow prevention portion may include a hot air flow prevention partition wall that extends from a side area of the unit mounting portion toward the metal foil and prevents the hot air from flowing to be introduced into the high-speed drying section.

The unit external mounting portion may be formed by a portion processed in a form of groove in one side of the hot air drying furnace chamber.

The unit mounting operation portion may further include a heat source penetration window that guides a heat source of the high-speed drying unit to be penetrated toward the hot air drying furnace chamber to proceed toward the metal foil in the hot air drying furnace chamber.

The heat source penetration window may include an inner window neighboring the metal foil in the hot air drying furnace chamber, an outer window forming a gap with the inner window and arranged to neighbor the high-speed drying unit, and a window cap supporting the inner window and the outer window to be coupled at corresponding positions.

The hot air drying furnace chamber may include a lower chamber and an upper chamber detachably coupled to an upper portion of the lower chamber, and the unit mounting operation portion is provided in the upper chamber.

The hybrid drying system may further include a hot air supply and exhaust portion that is provided in the hot air drying furnace chamber, and supplies hot air to the metal foil moving inside the hot air drying furnace chamber to dry the metal foil and exhausts the hot air used during drying.

The hot air supply and exhaust portion may include a lower supply tank arranged in the lower chamber and including a lower hot air nozzle through which hot air is supplied from below, a plurality of lower exhaust ducts arranged around the lower supply tank in the lower chamber and exhausting the hot air in the lower chamber toward the lower chamber, an upper supply tank arranged in the upper chamber and including an upper hot air nozzle through which hot air is supplied from above, and a plurality of upper exhaust ducts arranged around the upper supply tank in the upper chamber and exhausting the hot air in the upper chamber toward the upper chamber.

The lower supply tank, the lower exhaust ducts, the upper supply tank, and the upper exhaust ducts may each be arranged in plural numbers in the hot air drying furnace chamber, and a foil inlet, through which the metal foil before drying is input, may be formed in one side of the hot air drying furnace chamber and a foil outlet, through which the metal foil that has been dried is discharged, may be formed in the other side thereof.

The hybrid drying system may further include a plurality of rollers that are arranged in the hot air drying furnace chamber and move the metal foil.

The hybrid drying system may further include a system controller that is configured to control, in an organic mechanism, operations of the hot air supply and exhaust portion and the high-speed drying unit, for automatic progress of a drying process for the metal foil in the hot air drying furnace chamber.

The high-speed drying unit may be selected from among an NIR laser unit, an intense pulsed light (IPL) unit, and an IR lamp unit.

The hot air flow prevention portion may include a first duct coupled to one side of the hot air drying furnace chamber and including a first flow path communicating with an opening in one side of the hot air flow prevention partition wall, and a second duct coupled to the outer side of the hot air drying furnace chamber and including a second flow path communicating with an opening in the other side of the hot air flow prevention partition wall.

The hot air flow prevention portion may include a forced convection device that is connected to the first duct and generates forced convection toward the first flow path, and a capturing device that is connected to the second duct and captures foreign materials in air discharged through the second flow path.

The unit mounting operation portion may further include an opening shield portion that shields an opening of the unit external mounting portion.

The opening shield portion may detachably shield the opening of the unit external mounting portion from outside the unit external mounting portion.

The unit mounting operation portion may further include a cooling fluid flowing portion that is connected to the heat source penetration window in the hot air drying furnace chamber and allows a cooling fluid to flow through a gap between the inner and outer windows that form the heat source penetration window.

The cooling fluid flowing portion may include a cooling fluid supply duct connected to one side of the heat source penetration window and supplying the cooling fluid through the gap between the inner and outer windows that form the heat source penetration window, and a cooling fluid discharge duct connected to the other side of the heat source penetration window and discharging the cooling fluid coming out through the gap between the inner and outer windows that form the heat source penetration window.

### MODE OF DISCLOSURE

In order to fully understand the present inventive concept, its operational advantages of the present inventive concept, and the objects achieved by practicing the present inventive concept, reference should be made to the accompanying drawings illustrating preferred embodiments of the present inventive concept and the contents described in the accompanying drawings.

Hereinafter, an embodiment of the present inventive concept is described in detail with reference to the accompanying drawings. Throughout the drawings, like reference numeral denote like elements.

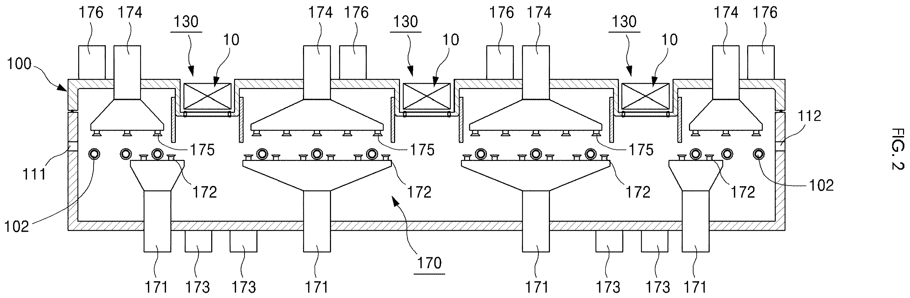

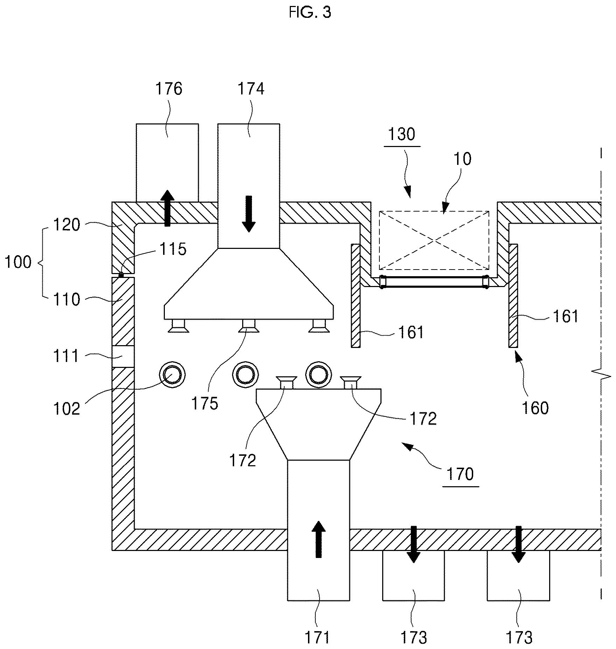

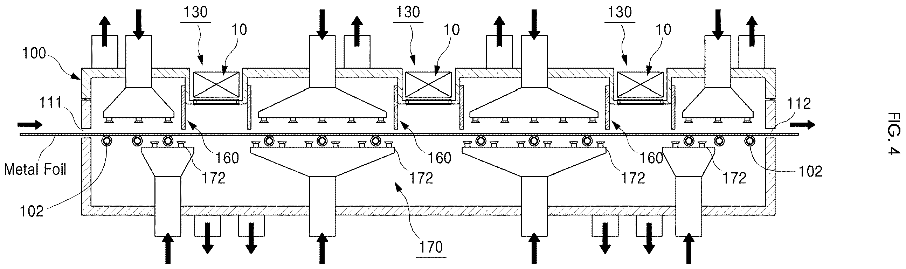

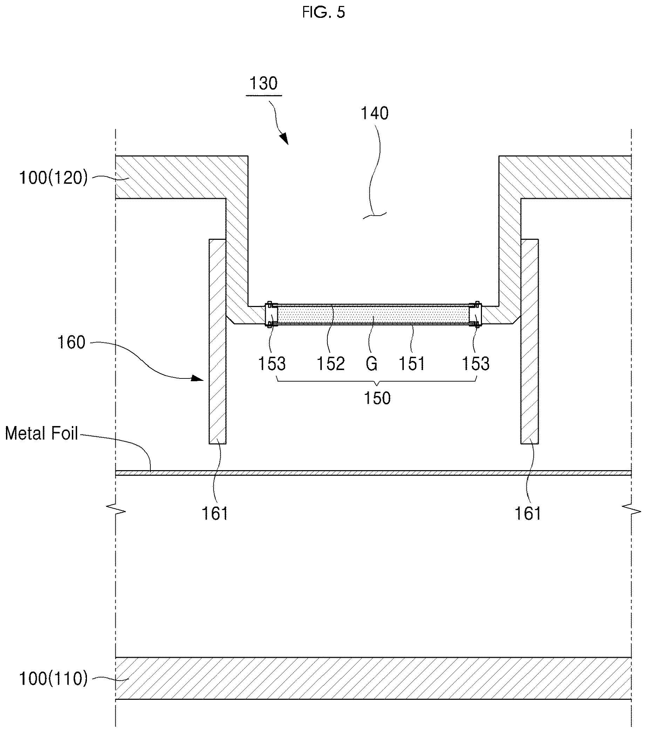

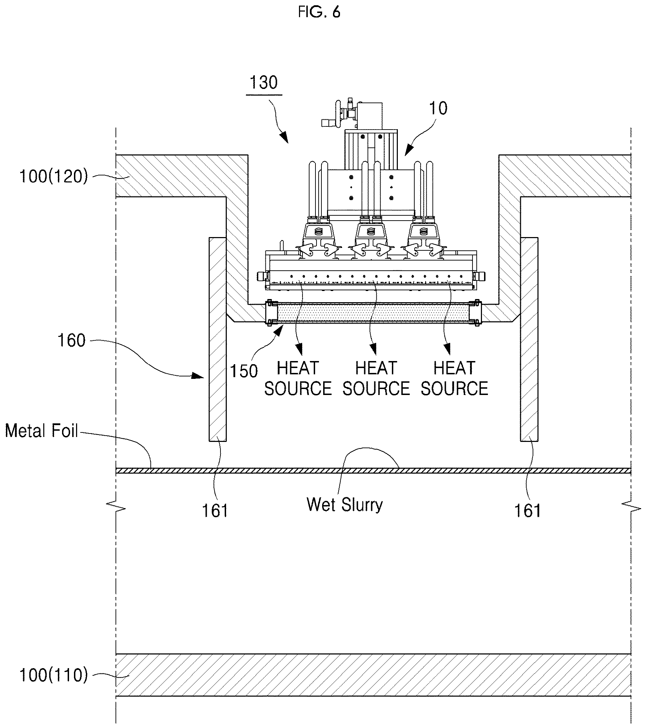

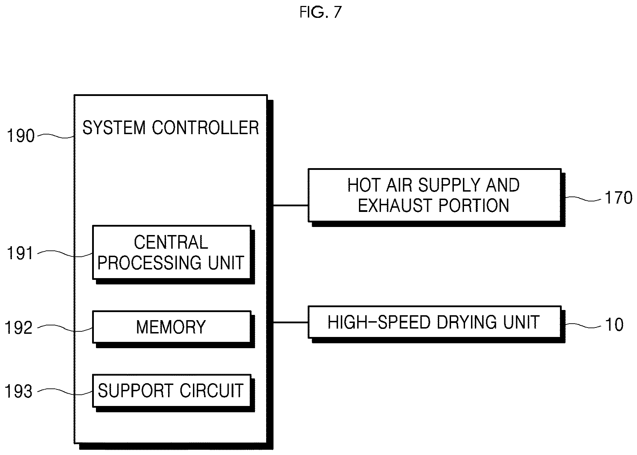

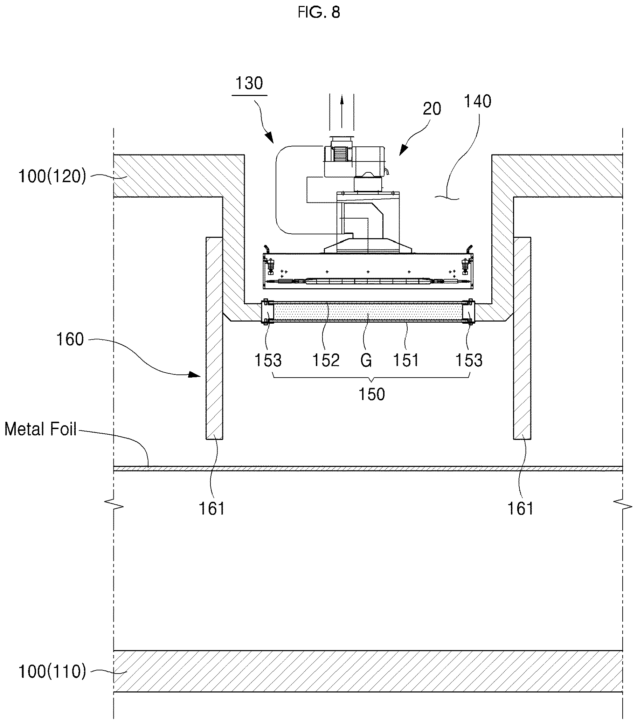

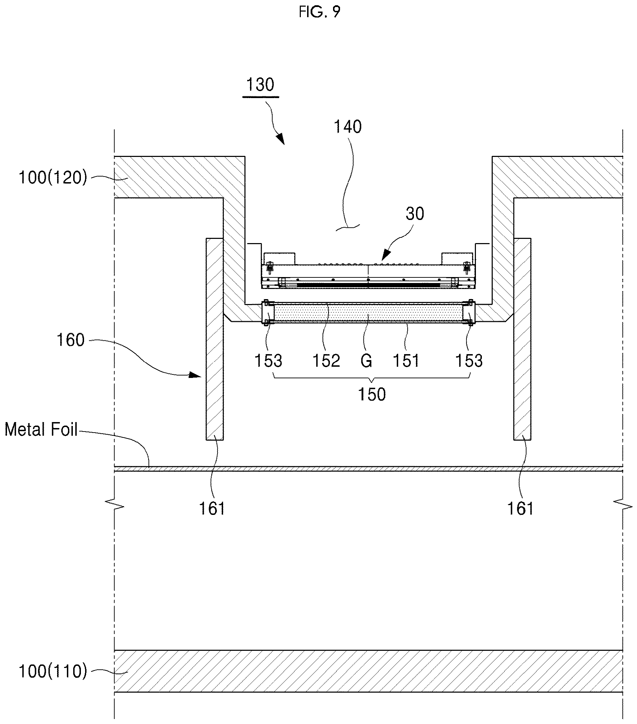

FIG. 2 is a configuration view of a hybrid drying system for manufacturing a secondary battery electrode, according to a first embodiment of the present inventive concept. FIG. 3 is an enlarged view of main parts of FIG. 2. FIG. 4 is a process diagram of FIG. 2. FIG. 5 is an enlarged view of a unit external mounting portion area, as an enlarged view of a main portion of FIG. 3. FIG. 6 is a process diagram showing that a high-speed drying unit is applied to FIG. 5. FIG. 7 is a control block diagram of the hybrid drying system for manufacturing a secondary battery electrode in FIG. 2. FIGS. 8 and 9 illustrate different application examples of the high-speed drying unit.

Referring to the drawings, a hybrid drying system for manufacturing a secondary battery electrode, according to the present embodiment, may effectively suppress binder migration that may occur when wet slurry is dried at high speed, and may prevent deterioration of adhesion between metal foil (Meta Foil) and a dried electrode according thereto even after wet slurry drying.

The hybrid drying system for manufacturing a secondary battery electrode, according to the present embodiment, which may provide such an effect, includes a hot air drying furnace chamber 100 in which a unit mounting operation portion 130 and a hot air flow prevention portion 160 are provided, and a structure, such as a roller 102, a hot air supply and exhaust portion 170, etc., is mounted, by location, in the hot air drying furnace chamber 100.

The hot air drying furnace chamber 100 forms a place for hot air drying of wet slurry applied to the metal foil forming a secondary battery electrode. The length of the hot air drying furnace chamber 100 may be appropriately designed.

If the length of the hot air drying furnace chamber 100 is long, the structure, such as the roller 102, the hot air supply and exhaust portion 170, etc., may be arranged a little more, and if the length of the hot air drying furnace chamber 100 is short, the structure, such as the roller 102, the hot air supply and exhaust portion 170, etc., may arranged a little less. Accordingly, the length and the size of the hot air drying furnace chamber 100 may vary, without limit, from what is shown.

The hot air drying furnace chamber 100 may include a lower chamber 110 and an upper chamber 120 detachably coupled to an upper portion of the lower chamber 110. As the hot air drying furnace chamber 100 has a structure in which the upper chamber 120 is open, the structure, such as the roller 102, the hot air supply and exhaust portion 170, etc., may be installed in the lower chamber 110 and the upper chamber 120.

A sealing member 115 is arranged between the lower chamber 110 and the upper chamber 120. Accordingly, hot air does not escape out of the hot air drying furnace chamber 100.

A plurality of rollers 102 are arranged inside the hot air drying furnace chamber 100. The metal foil subject to drying is dried while moving inside the hot air drying furnace chamber 100 by the operation of the rollers 102. For entrance of the metal foil, a foil inlet 111, through which metal foil before drying is input, is formed in one side of the hot air drying furnace chamber 100, and a foil outlet 112, through which the metal foil that has been dried is discharged, is formed in the other side thereof. Although the foil inlet 111 and the foil outlet 112 are illustrated simply in the form of hole in the drawings, a door for opening/closing the foil inlet 111 or the foil outlet 112 may be provided on a corresponding one of the foil inlet 111 and the foil outlet 112.

The hot air supply and exhaust portion 170 is provided in the hot air drying furnace chamber 100, and supplies hot air to the metal foil moving inside the hot air drying furnace chamber 100 to dry the metal foil and also exhausts the hot air used during drying. In other words, the metal foil is substantially dried by the hot air at high temperature by the operation of the hot air supply and exhaust portion 170.

The hot air supply and exhaust portion 170 includes a lower supply tank 171 arranged in the lower chamber 110 and including a lower hot air nozzle 172 for supplying hot air from below, a plurality of lower exhaust ducts 173 arranged around the lower supply tank 171 in the lower chamber 110 and exhausting the hot air in the lower chamber 110 toward the lower chamber 110, an upper supply tank 174 arranged in the upper chamber 120 and including an upper hot air nozzle 175 for supplying hot air from above, and a plurality of upper exhaust ducts 176 arranged around the upper supply tank 174 in the upper chamber 120 and exhausting the hot air in the upper chamber 120 toward the upper chamber 120.

In the present embodiment, the lower supply tank 171, the lower exhaust ducts 173, the upper supply tank 174, and the upper exhaust ducts 176 may each be provided in plurality inside the hot air drying furnace chamber 100. As described above, the numbers and the locations of the lower supply tank 171, the lower exhaust ducts 173, the upper supply tank 174, and the upper exhaust ducts 176 may vary, without limit, depending on the length and the size of the hot air drying furnace chamber 100.

Although, in the drawings, the sizes of the lower supply tanks 171 and the upper supply tanks 174 are illustrated to be different from each other, the lower supply tanks 171 and the upper supply tanks 174 may have the same size. Furthermore, the numbers of the lower hot air nozzles 172 and the upper hot air nozzles 175 respectively provided on the lower supply tanks 171 and the upper supply tanks 174 may differ from the drawings. Accordingly, the scope of the present inventive concept is not limited to the shape of the drawings.

Accordingly, when the metal foil is introduced into the hot air drying furnace chamber 100 through the foil inlet 111 and moved by the roller 102, as the hot air supply and exhaust portion 170 operates, that is, as an operation is performed in which hot air is supplied to the lower supply tanks 171 and the upper supply tanks 174 and the hot air that is slightly cooled by the lower exhaust ducts 173 and the upper exhaust ducts 176 is exhausted, the metal foil is dried at high temperature and then discharged through the foil outlet 112. A gas generated during the drying of wet slurry is discharged through the lower exhaust ducts 173 and the upper exhaust ducts 176.

On the other hand, when the metal foil is dried at high temperature only by the operation of hot air, many problems, such as an agglomeration issue of a solvent component, as described above, may occur, and also the risk of explosion may increase and productivity may deteriorate.

Accordingly, in order to safely and stably perform a drying process, in particular high-speed drying process, for metal foil (Meta Foil) of a secondary battery electrode, while eliminating or significantly reducing the agglomeration issue and risk of explosion of a solvent component, in the present system, the unit mounting operation portion 130 is applied to the hot air drying furnace chamber 100.

The unit mounting operation portion 130 provided in the hot air drying furnace chamber 100 is a device for externally mounting the high-speed drying unit 10, that is, drying at high temperature the metal foil in the hot air drying furnace chamber 100 while the high-speed drying unit 10 is arranged outside the hot air drying furnace chamber 100. Accordingly, in the hot air drying furnace chamber 100 according to the present embodiment, provided is the unit mounting operation portion 130 which enables a predetermined high-speed drying unit 10 that performs high-speed drying for the metal foil in the hot air drying furnace chamber 100 from the outside of the hot air drying furnace chamber 100, to be externally mounted and to operate to the inside of the hot air drying furnace chamber 100.

In the present embodiment, the unit mounting operation portion 130 is integrally provided in the upper chamber 120. The unit mounting operation portion 130 may include a unit external mounting portion 140 and a heat source penetration window 150.

The unit external mounting portion 140 may be provided in the upper chamber 120 and may form a place where the high-speed drying unit 10 is mounted. The unit external mounting portion 140 may be formed by a portion processed in the form of groove toward the lower chamber 110 from the upper chamber 120.

The high-speed drying unit 10 to be mounted in the unit external mounting portion 140 may include a NIR laser unit. However, as illustrated in FIG. 8, an intense pulsed light (IPL) unit may be a high-speed drying unit 20, or as illustrated in FIG. 9, an IR lamp unit may be a high-speed drying unit 30. Any of the units 10 to 30 employed in a state of being mounted in the unit external mounting portion 140 that is outside the upper chamber 120 dries the metal foil in the hot air drying furnace chamber 100 at high speed. Accordingly, the occurrence of the agglomeration issue of a solvent component may be prevented, and furthermore the risk of explosion may be eliminated. Also, high-speed drying is possible.

The heat source penetration window 150 is provided for operation of the high-speed drying unit 10 for high-speed drying. In other words, the heat source penetration window 150 is provided in the upper chamber 120 to neighbor the unit external mounting portion 140, and guides the heat source of the high-speed drying unit 10 to proceed toward the metal foil in the hot air drying furnace chamber 100.

The heat source penetration window 150 may include an inner window 151 that neighbors the metal foil in the hot air drying furnace chamber 100, an outer window 152 that forms a gap G with the inner window 151 and is arranged to neighbor the high-speed drying unit 10, and a window cap 153 that supports the inner and outer windows 151 and 152 to be coupled at corresponding positions. The inner window 151 and the outer window 152 may be special glass that is resistant to heat.

On the other hand, the hot air flow prevention portion 160 is provided in a high-speed drying section, and is a device that prevents the hot air in the hot air drying furnace chamber 100 from flowing into the high-speed drying section to suppress binder migration that may occur during the high-speed drying of wet slurry. Here, the high-speed drying section refers to an area of the unit mounting operation portion 130.

In the present embodiment, the hot air flow prevention portion 160 includes a hot air flow prevention partition wall 161 that extends from a side area of the unit mounting portion 130 toward the metal foil and prevents the hot air from flowing to be introduced into the high-speed drying section.

When, as in the present embodiment, the hot air flow prevention partition wall 161 is applied to the area of the unit mounting portion 130, the hot air may be prevented from flowing to be introduced into the high-speed drying section, and thus, binder migration may be suppressed. Accordingly, the deterioration of adhesion between the metal foil and the electrode with dried slurry may be prevented.

If the hot air flow prevention partition wall 161 as in the present embodiment is not installed, rapid drying by the high-speed drying unit 10 is possible, but binder migration occurs and thus an electrode quality problem such as deterioration of adhesion, etc. may be caused. Accordingly, in order to increase drying efficiency within normal electrode drying quality, as in the present embodiment, the hot air flow prevention partition wall 161 is installed.

On the other hand, a hybrid drying system for manufacturing a secondary battery electrode, according to the present embodiment, further include a system controller 190 for control of a system.

The system controller 190 controls, in an organic mechanism, the operations of the hot air supply and exhaust portion 170 and the high-speed drying unit 10 for automatic progress of a drying process for metal foil inside the hot air drying furnace chamber 100. The system controller 190 performing the above operation may include a central processing unit (CPU) 191, a memory 192, and a support circuit 193.

The CPU 191 may be one of various computer processors that are industrially applicable to control, in an organic mechanism, the operations of the hot air supply and exhaust portion 170 and the high-speed drying unit 10 for automatic progress of a drying process for metal foil inside the hot air drying furnace chamber 100 in the present embodiment.

The memory 192 is connected to the CPU 191. The memory 192, which is a computer-readable recording medium, may be installed at a local or remote place, and may be at least one memory, for example, random access memory (RAM), ROM, floppy disk, hard disk, or a certain digital storage form, which is easily usable.

The support circuit 193 is coupled with the CPU 191 to support the typical operation of the processor. The support circuit 193 may include a cache, a power supply, a clock circuit, an input/output circuit, a subsystem, etc.

In the present embodiment, for automatic progress of a drying process for metal foil inside the hot air drying furnace chamber 100, the system controller 190 controls, in an organic mechanism, the operations of the hot air supply and exhaust portion 170 and the high-speed drying unit 10, and a series of control processes may be stored in the memory 192. Typically, a software routine may be stored in the memory 192. The software routine may also be stored or executed by another central processing unit (not shown).

Although the process according to the present inventive concept is described as being executed by a software routine, at least some of the processes of the present inventive concept may be executed by hardware.

As such, the processes of the present inventive concept may be implemented by software executed on a computer system, hardware such as an integrated circuit, or a combination of software and hardware.

Hereinafter, the operation of the hybrid drying system for manufacturing a secondary battery electrode, according to the present embodiment, is described.

First, metal foil is introduced into the hot air drying furnace chamber 100 through the foil inlet 111, and then moved by the roller 102. In this state, the hot air supply and exhaust portion 170 operates. In other words, as hot air is supplied to the lower supply tanks 171 and the upper supply tanks 174 and the high-temperature drying of metal foil is performed. A gas generated during the drying of wet slurry is discharged through the lower exhaust ducts 173 and the upper exhaust ducts 176.

The high-speed drying unit 10 operates along with the operation of the hot air supply and exhaust portion 170. In this state, as the high-speed drying unit 10 is arranged outside the hot air drying furnace chamber 100, the heat source generated from the high-speed drying unit 10 proceeds toward the metal foil in the hot air drying furnace chamber 100 through the heat source penetration window 150 to serve in the high-speed drying of the metal foil.

As such, the metal foil that has been dried by the operation of the hot air supply and exhaust portion 170 and the operation of the high-speed drying unit 10 arranged outside the hot air drying furnace chamber 100 may be discharged through the foil outlet 112.

On the other hand, in a case of the present embodiment, as the hot air flow prevention partition wall 161 as the hot air flow prevention portion 160 is installed around the high-speed drying unit 10, the hot air may be prevented from flowing to be introduced into the high-speed drying section, and thus, binder migration may be suppressed. Accordingly, the deterioration of adhesion between the metal foil and the electrode with dried slurry may be prevented.

According to the present embodiment that operates with the structure as described above, the binder migration that may occur when wet slurry is dried at high speed may be effectively suppressed, and the deterioration of adhesion between the metal foil (Meta Foil) and the dried electrode according thereto even after wet slurry drying may be prevented.

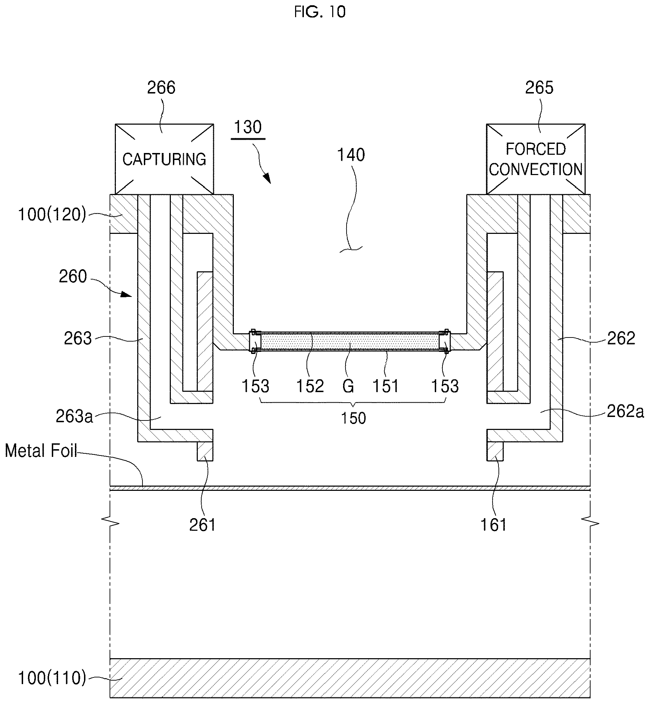

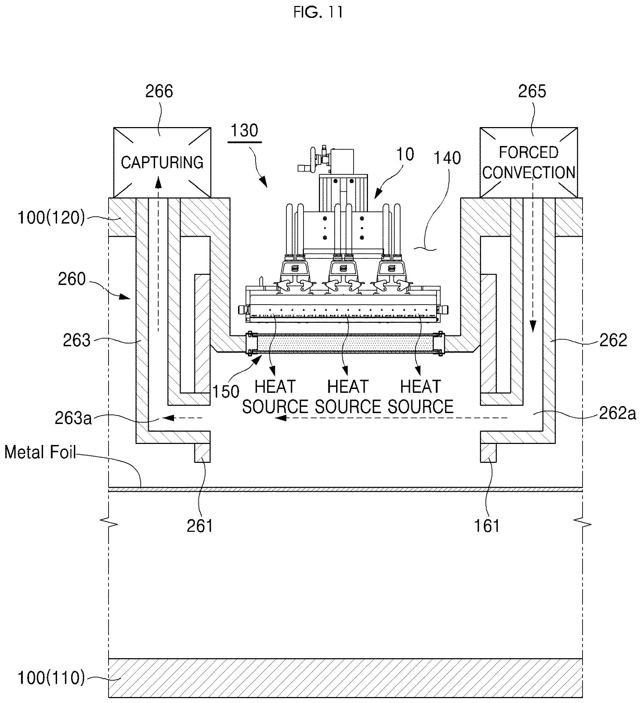

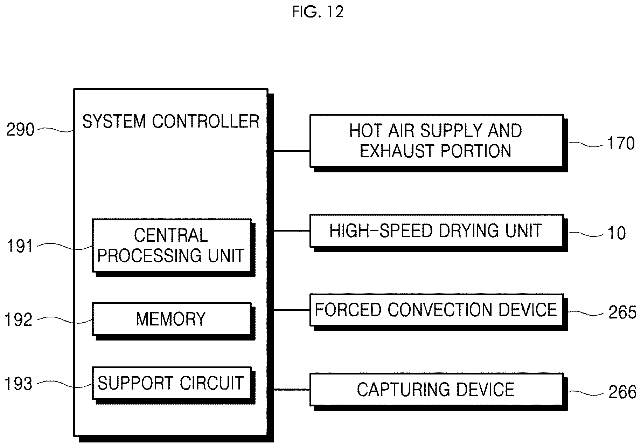

FIG. 10 is an enlarged view of a unit external mounting portion area in a hybrid drying system for manufacturing a secondary battery electrode, according to a second embodiment of the present inventive concept. FIG. 11 is a process diagram showing that the high-speed drying unit is applied to FIG. 10. FIG. 12 is a control block diagram of the hybrid drying system for manufacturing a secondary battery electrode in FIG. 10.

Referring to the drawings, in a case of the present embodiment, the structure and operation of a hot air flow prevention portion 260 are different from those in the embodiment described above. In other words, the hot air flow prevention portion 260 of the present embodiment further includes first and second ducts 262 and 263, a forced convection device 265, and a capturing device 266, along with a plurality of hot air flow prevention partition walls 261 that extend from a side area of the unit external mounting portion 140 toward the metal foil and block air flow in a corresponding portion. The structure, function, and role of the hot air flow prevention partition walls 261 are the same as those in the embodiment described above. Accordingly, redundant descriptions thereof are omitted.

The first duct 262 is a duct coupled to one side of the upper chamber 120 of the hot air drying furnace chamber 100 and includes a first flow path 262a that communicates with an opening in one side of the hot air flow prevention partition walls 261. The second duct 263 is a duct coupled to the other side of the upper chamber 120 of the hot air drying furnace chamber 100 and includes a second flow path 263a that communicates with an opening in the other side of the hot air flow prevention partition walls 261.

The forced convection device 265 is a device that is connected to the first duct 262 and generates forced convection toward the first flow path 262a. The forced convection device 265 is controlled by the system controller 290. The capturing device 266 is a device that is connected to the second duct 263 and captures foreign materials in the hot air discharged through the second flow path 263a. The capturing device 266 is also controlled by the system controller 290.

Accordingly, when, as the process progresses, the forced convection device 265 and the capturing device 266 are operated by the system controller 290, forced convection may be performed at a height that does not affect the electrode from the first flow path 262a of the first duct 262 through the second flow path 263a of the second duct 263. Accordingly, a gas generated as wet slurry is dried may be easily discharged.

Also, as the hot air flow prevention partition walls 261 are adopted without change, the hot air may be prevented from flowing to be introduced into the high-speed drying section, and thus, binder migration may be suppressed.

Even when the present embodiment is adopted, binder migration that may occur when wet slurry is dried at high speed may be effectively suppressed, and the deterioration of adhesion between the metal foil (Meta Foil) and the dried electrode according thereto even after wet slurry drying may be prevented.

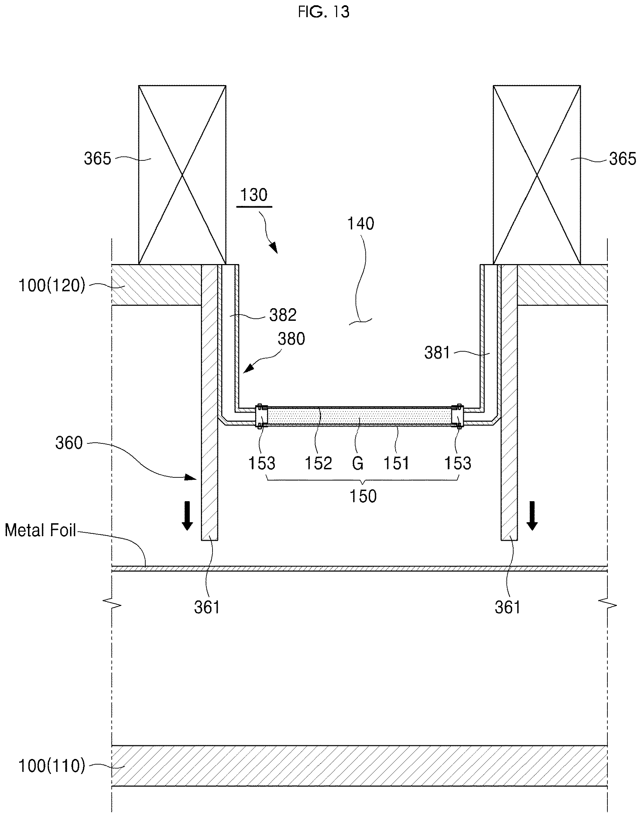

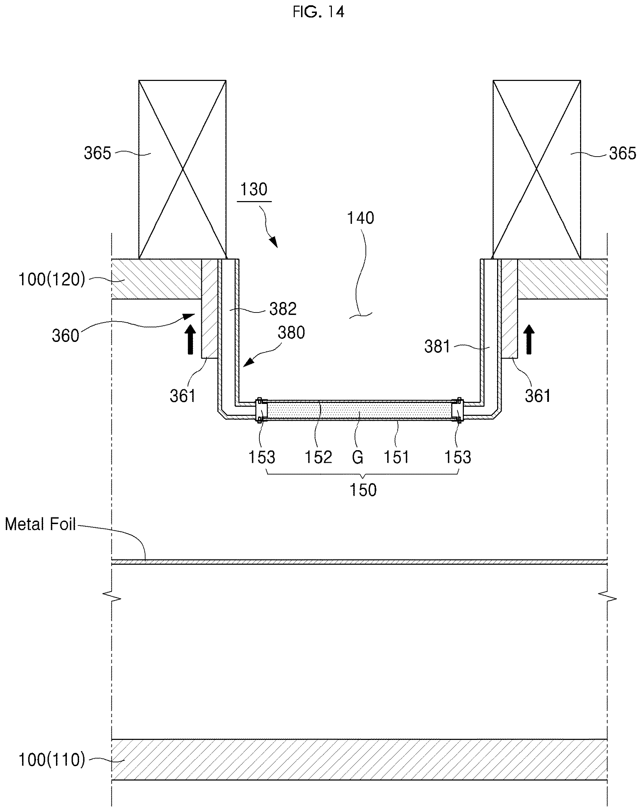

FIGS. 13 and 14 are enlarged views of a unit external mounting portion area in a hybrid drying system for manufacturing a secondary battery electrode, according to a third embodiment of the present inventive concept, which illustrate the operation of a partition wall.

Referring to the drawings, a hot air flow prevention portion 360 applied to the present embodiment also includes a hot air flow prevention partition wall 361 that extends from a side area of the unit external mounting portion 140 toward the metal foil and prevents the hot air from flowing to be introduced into the high-speed drying section. In this state, the hot air flow prevention partition wall 361 is provided as a movable type, not a fixed type.

A partition wall driving portion 365 is provided in the hot air flow prevention portion 360 to allow the hot air flow prevention partition wall 361 to be movable. The partition wall driving portion 365 may include a device, such as a cylinder, a motor, etc. As in the present embodiment, when the hot air flow prevention partition wall 361 is adopted as a movable type, a gap adjustment from the metal foil may be facilitated, and the hot air flow prevention partition wall 361 may be used only when necessary.

On the other hand, in addition to the above, in a case of the present embodiment, a cooling fluid flowing portion 380 is further applied to the area of a heat source penetration window 150. The cooling fluid flowing portion 380 is connected to the heat source penetration window 150 in an upper chamber 120, and allows a cooling fluid to flow through a gap G between inner and outer windows 151 and 152 forming the heat source penetration window 150. In other words, the cooling fluid flowing portion 380 is provided to block a hot heat source. The cooling fluid may variously include air, water, a coolant, etc.

The cooling fluid flowing portion 380 includes a cooling fluid supply duct 381 connected to one side of the heat source penetration window 150 and supplying the cooling fluid through the gap G between the inner and outer windows 151 and 152 forming the heat source penetration window 150, and a cooling fluid discharge duct 382 connected to the other side of the heat source penetration window 150 and discharging the cooling fluid coming out through the gap G between the inner and outer windows 151 and 152 forming the heat source penetration window 150. The cooling fluid flowing portion 370 may further include a blower, an intake, etc. for supply and discharge of the cooling fluid. It may be seen that all these items belong to the right scope of the present inventive concept.

Even when the present embodiment is adopted, binder migration that may occur when wet slurry is dried at high speed may be effectively suppressed, and the deterioration of adhesion between metal foil (Meta Foil) and a dried electrode according thereto even after wet slurry drying may be prevented.

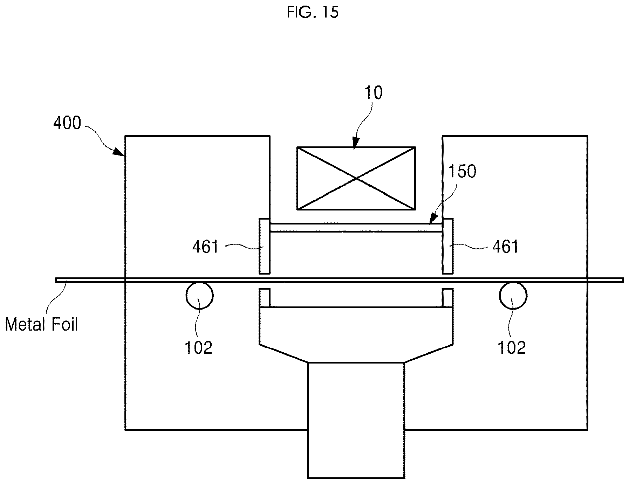

On the other hand, FIGS. 15 to 21 illustrate modified examples of a hot air drying furnace chamber.

FIG. 15 illustrates a system in which, while as in the first embodiment, the high-speed drying unit 10 is arranged in the middle of a hot air drying furnace chamber 400, a hot air flow prevention partition wall 461 is arranged around the high-speed drying unit 10. In other words, the system is an integrated system as in the first embodiment. The structure, such as the heat source penetration window 150, the rollers 102, etc., is the same as that in the first embodiment.

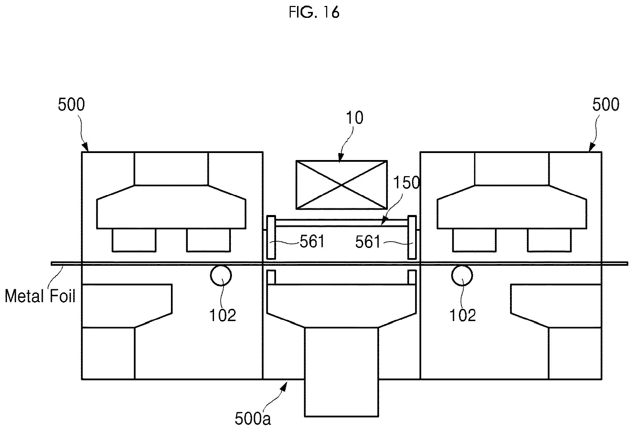

FIG. 16 illustrates that, while a hot air drying furnace chamber 500 is separated from a high-speed drying furnace chamber 500a, the high-speed drying furnace chamber 500a is docked between the hot air drying furnace chambers 500. The high-speed drying unit 10 and a hot air flow prevention partition wall 561 are applied to the high-speed drying furnace chamber 500a. Although having a different structure from that in the first embodiment, the system may expand.

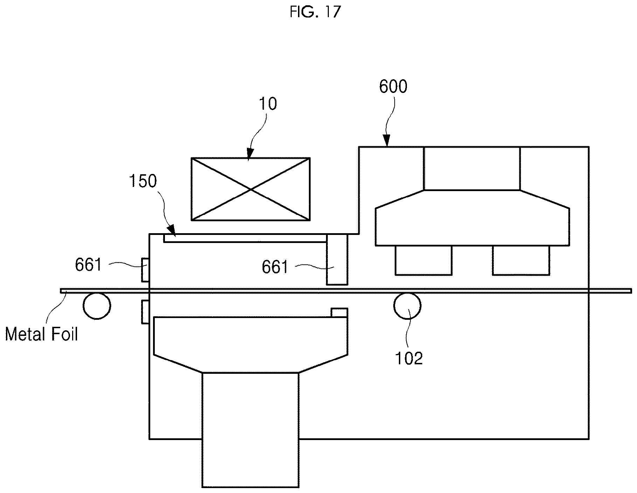

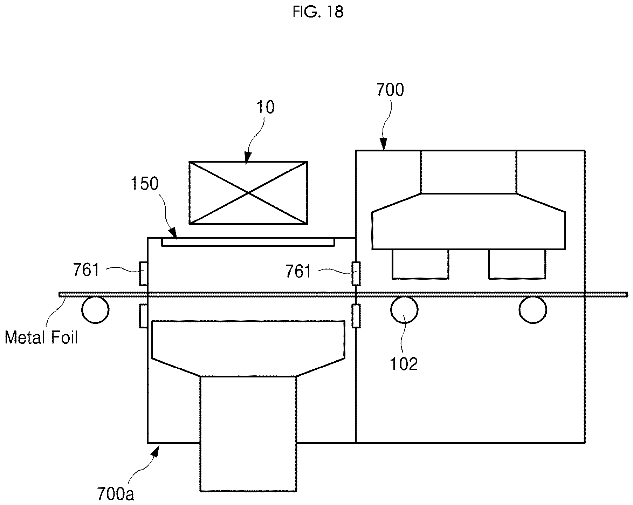

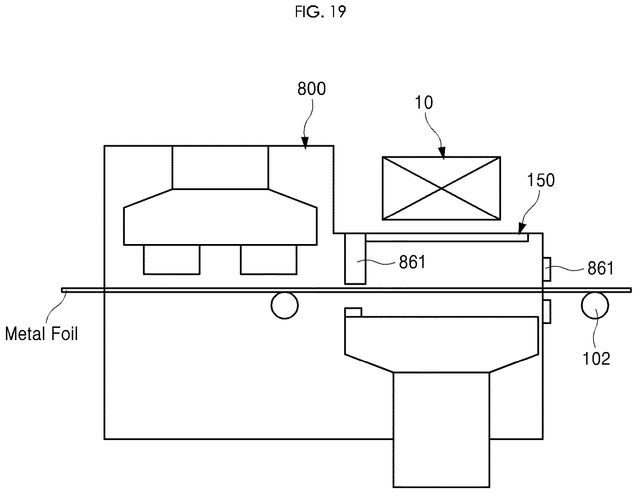

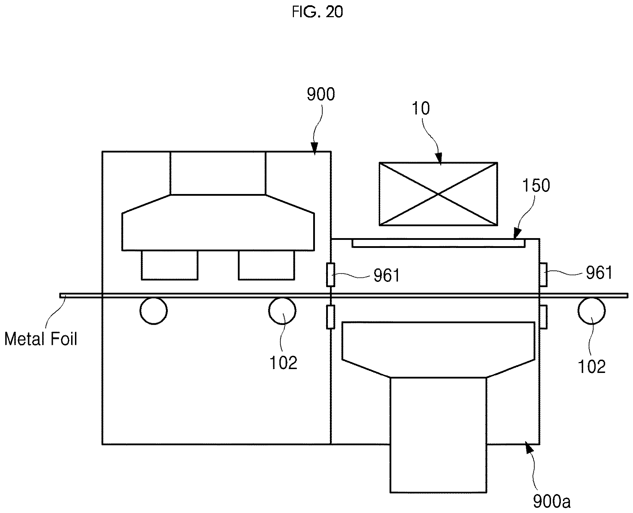

FIG. 17 illustrates a case in which a high-speed drying furnace chamber is configured together with and installed before a hot air drying furnace chamber 600, and FIG. 18 illustrates a system in which a high-speed drying furnace chamber 700a is separated from and docked at a hot air drying furnace chamber 700. Likewise, FIG. 19 illustrates a case in which a high-speed drying furnace chamber is configured together with and installed after a hot air drying furnace chamber 800, and FIG. 20 illustrates a system in which a high-speed drying furnace chamber 900a is separated from and docked at a hot air drying furnace chamber 900. In cases of FIGS. 17 to 20, hot air flow prevention partition walls 661 to 961 are respectively adopted at appropriate positions around the high-speed drying unit 10.

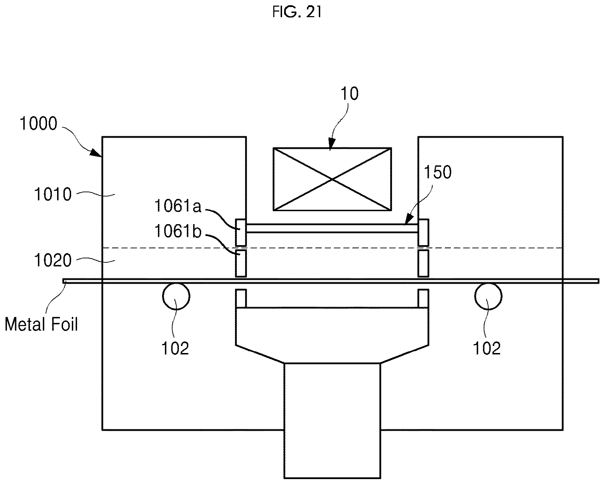

As in a case of FIG. 21, when a hot air drying furnace chamber 1000 is divided into an upper chamber 1010 and a lower chamber 1020, first and second hot air flow prevention partition walls 1061a and 1061b may be provided in the upper chamber 1010 and the lower chamber 1020, respectively, with respect to a separation line.

Even when the structures and systems of FIGS. 15 to 21 described above are adopted, binder migration that may occur when wet slurry is dried at high speed may be effectively suppressed, and the deterioration of adhesion between the metal foil (Meta Foil) and the dried electrode according thereto even after wet slurry drying may be prevented.

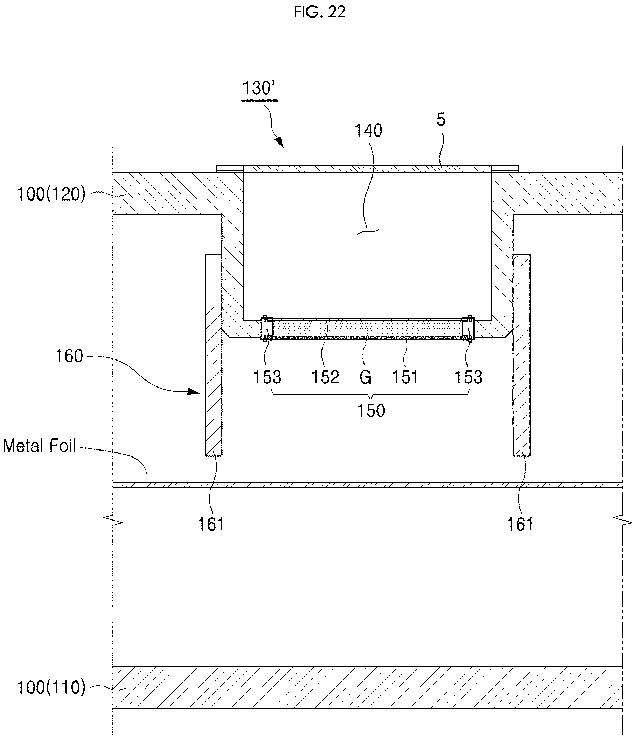

FIG. 22 is a view for describing an opening shield portion provided in a hybrid drying system for manufacturing a secondary battery electrode, according to a fourth embodiment of the present inventive concept.

In a case of the present embodiment, the system and structure are almost the same as those in the first embodiment described above, and the operation and the effect are the same. Accordingly, redundant descriptions thereof are omitted.

On the other hand, a unit mounting operation portion 130' applied to a hybrid drying system for manufacturing a secondary battery electrode, according to the present embodiment, may further include an opening shield portion 5 that shields an opening of the unit external mounting portion 140.

The opening shield portion 5 is a device that shields the opening of the unit external mounting portion 140. Although schematically illustrated in the drawings for convenience, the opening shield portion 5 may detachably shield the opening of the unit external mounting portion 140 from outside the unit external mounting portion 140. Thus, the high-speed drying unit 10 is easy to install and maintain/repair because the opening shield portion 5 may be opened when needed.

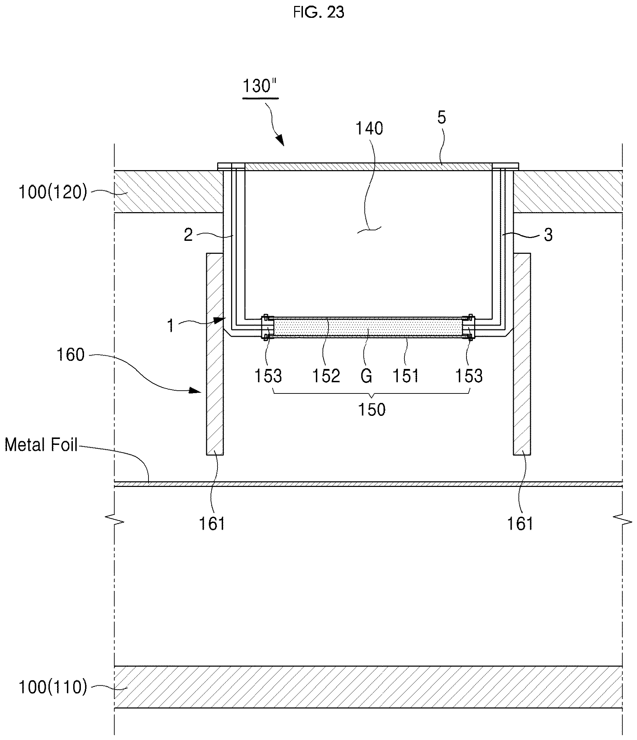

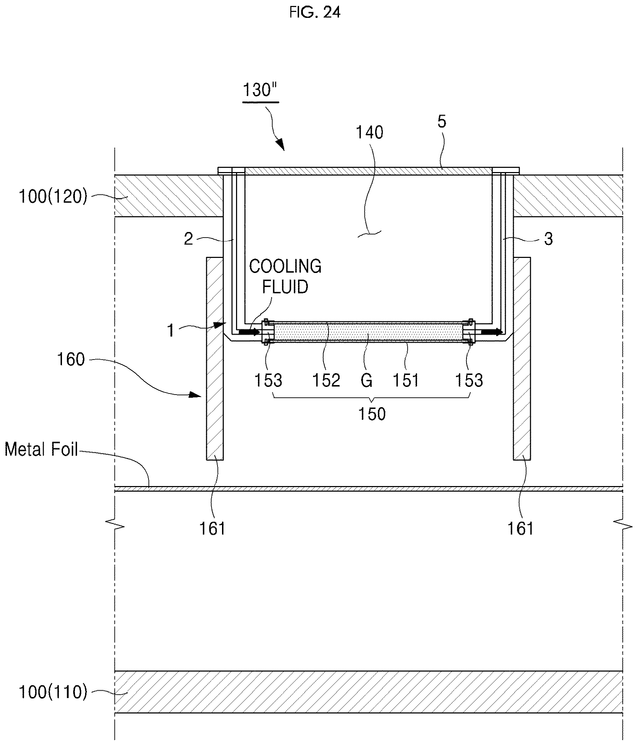

FIG. 23 is a view for describing a cooling fluid flow portion provided in a hybrid drying system for manufacturing a secondary battery electrode, according to a fifth embodiment of the present inventive concept. FIG. 24 is a view showing a flow of the cooling fluid in FIG. 23.

In a case of the present embodiment, the system and structure are almost the same as those in the first embodiment described above, and the operation and the effect are the same. Accordingly, redundant descriptions thereof are omitted.

On the other hand, a unit mounting operation portion 130" applied to a hybrid drying system for manufacturing a secondary battery electrode, according to the present embodiment, further includes a cooling fluid flow portion 1 in addition to the opening shield portion 5 of the fourth embodiment described above.

The cooling fluid flow portion 1 is connected to the heat source penetration window 150 in the upper chamber 120, and allows a cooling fluid to flow through a gap G between inner and outer windows 151 and 152 forming the heat source penetration window 150. In other words, the cooling fluid flow portion 1 is provided to block a hot heat source. The cooling fluid may variously include air, water, a coolant, etc.

The cooling fluid flowing portion 1 includes a cooling fluid supply duct 2 connected to one side of the heat source penetration window 150 and supplying the cooling fluid through the gap G between the inner and outer windows 151 and 152 forming the heat source penetration window 150, and a cooling fluid discharge duct 3 connected to the other side of the heat source penetration window 150 and discharging the cooling fluid coming out through the gap G between the inner and outer windows 151 and 152 forming the heat source penetration window 150. Although only a cooling fluid line is illustrated in the drawing, a blower, an intake, etc. for supply and discharge of the cooling fluid may be added.

As such, while this inventive concept has been particularly shown and described with reference to preferred embodiments thereof, it will be understood by those of ordinary skill in the art that various changes in form and details may be made therein without departing from the spirit and scope of the inventive concept as defined by the appended claims. Therefore, the scope of the inventive concept is defined not by the detailed description of the inventive concept but by the appended claims, and all differences within the scope will be construed as being included in the present inventive concept.

### INDUSTRIAL APPLICABILITY

The present inventive concept may be used in the field of manufacturing a secondary battery electrode.

## Claims

1. A hybrid drying system for manufacturing a secondary battery electrode, the hybrid drying system comprising:
a hot air drying furnace chamber forming a place for hot air drying of wet slurry applied to metal foil (Meta Foil) forming the secondary battery electrode and having a high-speed drying section formed in one side thereof; and
a hot air flow prevention portion provided in the high-speed drying section, and preventing hot air in the hot air drying furnace chamber from flowing into the high-speed drying section, to suppress migration of a binder included in the wet slurry during the high-speed drying of the wet slurry.

2. The hybrid drying system of claim 1, further comprising
a unit mounting operation portion that is provided in the hot air drying furnace chamber, in which a predetermined high-speed drying unit performing high-speed drying for the metal foil in the hot air drying furnace chamber is mounted and operates,
wherein the high-speed drying section is arranged in an area of the unit mounting operation portion.

3. The hybrid drying system of claim 2, wherein
the unit mounting operation portion comprises
a unit mounting portion that is provided in the hot air drying furnace chamber and forms a place in which the high-speed drying unit is mounted.

4. The hybrid drying system of claim 3, wherein
the unit mounting portion comprises a unit external mounting portion that allows the high-speed drying unit to be mounted outside the hot air drying furnace chamber.

5. The hybrid drying system of claim 3, wherein
the hot air flow prevention portion comprises a hot air flow prevention partition wall that extends from a side area of the unit mounting portion toward the metal foil and prevents the hot air from flowing to be introduced into the high-speed drying section.

6. The hybrid drying system of claim 4, wherein
the unit external mounting portion is formed by a portion processed in a form of groove in one side of the hot air drying furnace chamber.

7. The hybrid drying system of claim 2, wherein
the unit mounting operation portion further comprises
a heat source penetration window that guides a heat source of the high-speed drying unit to be penetrated toward the hot air drying furnace chamber to proceed toward the metal foil in the hot air drying furnace chamber.

8. The hybrid drying system of claim 7, wherein
the heat source penetration window comprises:
an inner window neighboring the metal foil in the hot air drying furnace chamber;
an outer window forming a gap with the inner window and arranged to neighbor the high-speed drying unit; and
a window cap supporting the inner window and the outer window to be coupled at corresponding positions.

9. The hybrid drying system of claim 2, wherein
the hot air drying furnace chamber comprises:
a lower chamber; and
an upper chamber detachably coupled to an upper portion of the lower chamber, and
the unit mounting operation portion is provided in the upper chamber.

10. The hybrid drying system of claim 9, further comprising
a hot air supply and exhaust portion that is provided in the hot air drying furnace chamber, and supplies hot air to the metal foil moving inside the hot air drying furnace chamber to dry the metal foil and exhausts the hot air used during drying.

11. The hybrid drying system of claim 10, wherein
the hot air supply and exhaust portion comprises:
a lower supply tank arranged in the lower chamber and including a lower hot air nozzle through which hot air is supplied from below;
a plurality of lower exhaust ducts arranged around the lower supply tank in the lower chamber and exhausting the hot air in the lower chamber toward the lower chamber;
an upper supply tank arranged in the upper chamber and including an upper hot air nozzle through which hot air is supplied from above; and
a plurality of upper exhaust ducts arranged around the upper supply tank in the upper chamber and exhausting the hot air in the upper chamber toward the upper chamber.

12. The hybrid drying system of claim 11, wherein
the lower supply tank, the lower exhaust ducts, the upper supply tank, and the upper exhaust ducts are each arranged in plural numbers in the hot air drying furnace chamber, and
a foil inlet, through which the metal foil before drying is input, is formed in one side of the hot air drying furnace chamber and a foil outlet, through which the metal foil that has been dried is discharged, is formed in the other side thereof.

13. The hybrid drying system of claim 1, further comprising
a plurality of rollers that are arranged in the hot air drying furnace chamber and move the metal foil.

14. The hybrid drying system of claim 10, further comprising
a system controller that is configured to control, in an organic mechanism, operations of the hot air supply and exhaust portion and the high-speed drying unit, for automatic progress of a drying process for the metal foil in the hot air drying furnace chamber.

15. The hybrid drying system of claim 1, wherein
the high-speed drying unit is selected from among an NIR laser unit, an intense pulsed light (IPL) unit, and an IR lamp unit.

16. The hybrid drying system of claim 1, wherein
the hot air flow prevention portion comprises:
a first duct coupled to one side of the hot air drying furnace chamber and including a first flow path communicating with an opening in one side of the hot air flow prevention partition wall; and
a second duct coupled to the outer side of the hot air drying furnace chamber and including a second flow path communicating with an opening in the other side of the hot air flow prevention partition wall.

17. The hybrid drying system of claim 16, wherein
the hot air flow prevention portion comprises:
a forced convection device that is connected to the first duct and generates forced convection toward the first flow path; and
a capturing device that is connected to the second duct and captures foreign materials in air discharged through the second flow path.

18. The hybrid drying system of claim 4, wherein
the unit mounting operation portion further comprises an opening shield portion that shields an opening of the unit external mounting portion.

19. The hybrid drying system of claim 18, wherein,
the opening shield portion detachably shields the opening of the unit external mounting portion from outside the unit external mounting portion.

20. The hybrid drying system of claim 19, wherein
the unit mounting operation portion further comprising
a cooling fluid flowing portion that is connected to the heat source penetration window in the hot air drying furnace chamber and allows a cooling fluid to flow through a gap between the inner and outer windows that form the heat source penetration window.

21. The hybrid drying system of claim 20, wherein
the cooling fluid flowing portion comprises:
a cooling fluid supply duct connected to one side of the heat source penetration window and supplying the cooling fluid through the gap between the inner and outer windows that form the heat source penetration window; and
a cooling fluid discharge duct connected to the other side of the heat source penetration window and discharging the cooling fluid coming out through the gap between the inner and outer windows that form the heat source penetration window.
